# EUROPÄISCHE PATENTSCHRIFT

(11) **EP 1 717 927 B1**
(45) Veröffentlichungstag und Bekanntmachung des Hinweises auf die Patenterteilung: **04.07.2012**
(21) Anmeldenummer: 06015367.3
(22) Anmeldetag: 22.05.2002
(51) Int. Cl.: H02J 13/00, H04L 12/403

(54) **Powerline-Steuersystem**
Powerline control system
Système de commande par ligne de tension

(30) Priorität: 12.06.2001 DE 10128258
(43) Veröffentlichungstag der Anmeldung: 02.11.2006
(62) Teilanmeldung aus: 02750966.0
(73) Patentinhaber: Zumtobel Lighting GmbH, 6850 Dornbirn (AT)
(72) Erfinder: Wittmann, Gerhard, 81247 München (DE); Kuffer, Alois, 82041 Deisenhofen (DE)
(74) Vertreter: Thun, Clemens

(56) Entgegenhaltungen:
- US-A- 5 559 377
- US-A- 5 818 725
- US-A- 5 986 539
- US-B1- 6 229 432
- US-B1- 6 388 399

## Beschreibung

Die vorliegende Erfindung betrifft ein Steuerungssystem für elektrische Geräte wie Außenlichtanlagen bzw. ein Verfahren zum Betreiben von Außenlichtanlagen.

Durch die in den letzten Jahren entwickelten Steuergeräte zum Betreiben vom Lampen wurde die Möglichkeit eröffnet, komplexe Beleuchtungssysteme zu bilden, bei denen die verteilt angeordneten Leuchten von einer Zentraleinheit individuell angesteuert werden. Derartige Beleuchtungssysteme kommen beispielsweise in größeren Gebäuden zum Einsatz, wobei die Leuchten üblicherweise zum einen an das normale Stromversorgungsnetz angeschlossen und zum anderen über eine Busleitung mit der Zentraleinheit verbunden sind. Über diese Busleitung werden von der Zentraleinheit digitale Befehle an die Steuergeräte der dezentral angeordneten Leuchten übermittelt.

Ein entsprechender Aufbau wäre selbstverständlich auch bei Außenlichtanlagen - beispielsweise zur Straßenbeleuchtung oder dergleichen - möglich, die Schwierigkeit besteht dann allerdings darin, eine Übertragung der Steuerbefehle von der Zentraleinheit aus zu den weit entfernt angeordneten Leuchten zu ermöglichen. Das Verlegen von Busleitungen ist bei Außenlichtanlagen wegen der relativ großen Entfernungen und des damit verbundenen Aufwands in der Regel nur schwer oder sogar gar nicht möglich.

Dennoch wäre auch bei Außenlichtanlagen eine komfortable und vielfältige Steuerung der einzelnen Leuchten von zentraler Stelle aus wünschenswert, um beispielsweise eine bedarfsgerechte Beleuchtung bestimmter Bereiche, Ereignisse oder Veranstaltungen zu ermöglichen. Hierdurch kann der Beleuchtungskomfort aber auch die Sicherheit erhöht werden. Darüber hinaus trägt eine Kommunikation zwischen den Leuchten und einer Zentraleinheit zu einer Reduzierung des Wartungsaufwandes und zum Energiesparen bei. Dies setzt allerdings voraus, daß die Leuchten individuell angesteuert werden können und ein kommunikationsfähiges System zum Einsatz kommt, welches eine gezielte Status- bzw. Fehlererkennung und Fehlerrückmeldung ermöglicht.

Eine alternative Möglichkeit zur Datenübertragung ohne die Notwendigkeit zusätzlicher Busleitungen besteht in der sog. Powerline-Technologie. Hierbei werden die Strom- bzw. Spannungsversorgungsleitungen selbst für die Datenübertragung benutzt, indem auf die normale Netzfrequenz von 50 Hz eine modulierte höherfrequente Trägerfrequenz aufgebracht wird. Die Trägerfrequenz enthält in verschlüs selter Form die zu übertragenden Informationen, welche von entsprechenden Empfängern entschlüs selt werden. Derartige Powerline-Verfahren kommen bereits bei einigen Beleuchtungsanlagen zur Gebäudebeleuchtung oder anderen haus-internen Steueranlagen zum Einsatz, wobei hier das interne Stromnetz zur Datenübert ragung verwendet wird. Eine Übersicht über die verschiedenen Funktionsweisen und Möglichkeiten der Powerline-Technologie kann dem Buch "Powerline Kommunikation" von Klaus Dostert, Franzis Verlag GmbH, entnommen werden. Insofern werden diese Grundlagen im Vorliegenden nicht wiederholt.

Verfahren zur Übertragung von digitalen Informationen über das Stromversorgungsnetz sind ferner in der DE 40 01 265 A1, DE 40 01 266 A1, EP 0 634 842 A2 und EP 0 200 016 A2 beschrieben.

Für Außenlich tanlagen ist die Verwendung eines Powerline-Verfahrens insofern problematisch, als sehr große Entfernungen zwischen dem Sender und dem Empfänger sowie deutliche Temperaturschwankungen auftreten können. Aufgrund der hierdurch entstehenden Dämpfungen und Störungen der Signale ist nicht ohne weiteres sichergestellt, daß die Informationen auch richtig empfangen und umgesetzt werden. Für einen zuverlässigen Betrieb der Anlage allerdings ist eine Datenübertragun g mit hoher Sicherheit gegenüber unerkannten Übertragungsfehlern unerläßlich. Dabei ist zu berücksicht igen, daß der maximal zulässige Signalpegel (dBµV) durch Normen begrenzt ist. In Europa ist beispielsweise seit 1991 die CENELEC-Norm EN 50065 gü Itig, gemäß der in dem für die private Nutzung vorgesehenen Frequenzbereich von 95 kHz bis 148,5 kHz - der beispielsweise für gebäude-interne Systeme zur Verfügung steht - ein maximaler Einspeisepegel von 116 dBµV (=631 mV effektiv) zulässig ist. In dem für Energieversorgungsunternehmen reservierten Frequenzbereich zwischen 9 kHz und 95 kHz, fällt der maximal zulässige Signalpegel von 134 dBµV (= 5 V) auf 122 dBµV (=1,25 V) ab. Diese relativ starken Beschränkung erschweren die Realisierung eines Systems zur Fernsteuerung von Leuchten mittels Powerline-Kommunikation. Diese Probleme stellen sich natürlich nicht nur bei Lichtanlagen, sondern bei allen elektrischen Geräten im Außen bereich.

Aus der US 6,229,432 B1, die den nächstliegenden Stand der Technik repräsentiert, ist ein Transceiver-Modul zur Powerline-Übertragung bekannt, das als sogenannter "Repeater" ausgebildet, also empfangene Signale und Daten wiederum aussendet, um die Reichweite einer Powerline-Kommunikation zu erhöhen. Dabei werden zusätzlich verschiedene Möglichkeiten zur Übertragung sverbesserung erwähnt, die beispielsweise das redundante, wiederholte Senden von Daten, die Anpassung einer Wartezeit vor dem Senden von Daten, sowie einen Detektormechanismus zur Erkennung eines Nulldurchgangs des Poweline-Signals betreffen.

Ferner beschreibt die US 5,986,539 A die Möglichkeit, zeitsynchronisiert in einem Halbduplexverfahren Datenpakete mit Hilfe eines Powerline-Verfahrens zu übermitteln.

Es ist daher Aufgabe der vorliegenden Erfindung, ein Gesamtkonzept für ein Steuerungssystem zum Betreiben von elektrischen Geräten im Außenbereich anzugeben, bei dem die Datenübertragung durch ein Powerline-Verfahren erfolgt und eine zuverlässige und fehlerfreie Kommunikation sichergestellt ist. Darübe r hinaus soll ein vielseitiger und störungsfreier Betrieb - beispielsweise der Leuchten - ermöglicht werden.

Die Aufgabe wird durch die in den unabhängigen Ansprüchen definierten Verfahren bzw. Vorrichtungen gelöst.

Ein erster Aspekt der Erfindung betrifft ein Verfahren zum Steuern von elektrischen Geräten, insbesondere von Leuchten, die an ein gemeinsames Stromversorgungsnetz angeschlossen sind. Erfindungsgemäß tauschen dabei die elektrischen Geräte mittels einem Powerline-Verfahren Informationen mit einer Steuereinheit über das Stromversorgungsnetz aus, wobei die elektrischen Geräte derart zueinander synchronisiert sind, daß sie in vorgegebenen Sende- und Empfangszyklen Informationen von dem Stromversorgungsnetz empfangen bzw. in dieses senden. Dabei wirkt jedes elektrische Gerät als sog. Repeater, indem es eine in einem Sende- und Empfangszyklus empfangene Information - im Folgenden als Telegramm bezeichnet - in einem mittelbar oder unmittelbar folgenden Sende- und Empfangszyklus wieder in das Stromversorgungsnetz sendet.

Diese Vorgehensweise hat zur Folge, daß sich ein an einer beliebigen Stelle in das Stromversorgungsnetz eingespeistes Telegramm gleichsam lawinenartig über das gesamte Netz ausbreitet, bis es schließ lich von dem andressierten elektrischen Gerät empfangen wird. Vorzugsweise kann vorgesehen sein, daß ein elektrisches Gerät ein Telegramm nur dann weiterleitet, wenn dieses Telegramm nicht ausschließlich fü r das jeweilige elektrische Gerät selbst bestimmt ist.

Durch die Synchronisation der elektrischen Geräte zueinander wird sichergestellt, daß keine Auslöschung eines von zwei benachbarten elektrischen Geräten gesendeten identischen Telegramms erfolgt. Hierdurch wird auch über eine größere Distanz hinweg eine zuverlässige Datenübert ragung gewährleistet. Gleichzeitig wird auch ein hoher Datendurchsatz erreicht, da die elektrischen Geräte in ihrer Repeater-Funktion zeitgleich in verschiedenen Bereichen des Netzes verschiedene Telegramme senden können. Da dies ohne eine Signalstärkenbewertung stattfindet, zeichnet sich das erfindungsgemäße Verfahren insbesondere dadurch aus, daß hiermit auf einfache Weise ein hoher Datendurchsatz mit einer geringen Fehlerquote erzielt wird.

Gemäß einer Weiterbildung kann vorgesehen sein, daß die elektrischen Geräte eine weiterzuleitende Information für eine vorgegebene Anzahl von aufeinanderfolgenden Sende- und Empfangszyklen in das Stromversorgungsnetz senden. Hierdurch wird die Übertragungssicherheit erhöht. Erfindungsgemäß ist vorgesehen, daß die elektrischen Geräte in der Lage sind, bereits einmal empfangene und weitergeleitete Telegramme wiederzuerkennen, so daß sie ein zu einem späteren Zeitpunkt ein weiteres Mal empfangenes Telegramm nicht mehr weiterleiten. Hierdurch wird verhindert, daß Telegramme in Endlosschleifen durch das Netz laufen. Diese Wiedererkennung kann beispielsweise durch eine geeignete Indizierung (Indexnummer etc.) der Telegramme ermöglicht werden.

Die Datenüber tragung erfolgt vorzugsweise durch eine Phasenmodulation der Trägerfrequenz (sogenanntes Phase Shift Keying - PSK). Dieses Verfahren zeichnet sich durch seine geringe Störanfälligkeit aus. Eine Synchronisation der verschiedenen Leuchten erfolgt dabei durch eine Überwachung der Netzfrequenz.

Dieser Aspekt der Erfindung betrifft auch ein Steuerungssystem für elektrische Geräte, insbesondere für Leuchten, die an ein gemeinsames Stromversorgungsnetz angeschlossenen sind, wobei das Steuerungssystem mindestens eine ebenfalls an das Stromversorgungsnetz anschließbare Steuereinheit sowie Sende- und Empfangseinheiten aufweist, die mit einem Powerline-Verfahren Informationen mit der Steuereinheit über das Stromversorgungsnetz austauschen und jeweils einem elektrischen Gerät zugeordnet werden können. Die Sende- und Empfangseinheiten sind dabei in der oben beschriebenen Weise zueinander synchronisiert und weisen zum Weiterleiten der Informationen die erfindungsgemäße Repeater-Funktion auf. Ein solches Steuerungssystem kann ggf. bei bestehenden Lichtanlagen im Außenbereich nachgerüstet werden.

Ferner betrifft diese Erfindung auch eine Leuchte für eine Lichtanlage, die aus mehreren an ein gemeinsames Stromversorgungsnetz angeschlossen Leuchten besteht, wobei die Leuchte eine Sende- und Empfangseinheit aufweist, die als Schnittstelle gemäß dem Powerline-Verfahren ausgelegt ist. Die Sende- und Empfangseinheit ist dabei derart ausgestaltet, daß sie in vorgegebenen Sende- und Empfangszyklen Informationen austauschen kann, wobei sie zum Übe rtragen der Informationen eine Repeater-Funktion aufweist, indem sie eine in einem Sende- und Empfangszyklus empfangene Information in einem mittelbar oder unmittelbar folgenden Sende- und Empfangszyklen wieder sendet.

Eine Weiterbildung der vorliegenden Erfindung betrifft die zeitliche Struktur der Datenübertragun g. So können die zu übert ragenden Daten bzw. Telegramme entsprechend ihrer Funktion in verschiedene Gruppen unterteilt werden. Sogenannte Systemtelegramme sind beispielsweise dafür zuständig, daß sich die Leuchten in dem System anmelden können bzw. abgemeldet werden. Darüber hinaus haben diese Systemtelegramme die Aufgabe, Daten - beispielsweise Adressdaten, Meßdaten, Betriebsdaten oder -fehler - zwischen einer mit dem Netz verbundenen Steuereinheit und den Leuchten auszutauschen. Daneben kommen sogenannte Anwendertelegramme zum Einsatz, mit welchen die Leuchten dazu veranlaßt werden, eine bestimmte Funktion auszuführen, beispielsweise sich einzuschalten oder die Helligkeit zu verändern. Da diese Anwendertelegramme die eigentlichen Steuerbefehle zum Betreiben der Leuchten und zum Einstellen der Helligkeit beinhalten, besitzen diese Telegramme eine höhere Priorität als die zuvor erwähnten Systemtelegramme.

Eine andere Möglichkeit der Unterscheidung besteht darin, die verschiedenen Telegramme entsprechend ihres Zielortes in Vorwärtstelegramme, Rückwärtstelegramme und I-(Interrupt)-Telegramme zu unterteilen. Als Vorwärtstelegramme werden diejenigen Telegramme bezeichnet, die von einer Steuereinheit abgesendet wurden und an eine oder mehrere der Leuchten adressiert sind. Dies sind beispielsweise Helligkeitsbefehle, Ein- und Ausschaltbefehle, Abfragen etc. Rückwärtstelegramme hingegen sind Informationen, welche von den Leuchten als Antwort auf ein Vorwärtstelegramm an die Steuereinheit zurückgesendet werden. Hierbei kann es sich beispielsweise um Statusinformationen, die Übermitt lung eines Meßwertes oder dergleichen handeln. Vorzugsweise wird ein solches Rückwärts telegramm nur dann von einer Leuchte gesendet, wenn sie zuvor über ein entsprechendes Vorwärtstelegramm dazu aufgefordert wurde. Ein I-Telegramm schließlich kann dann von einer Leuchte gesendet werden, wenn ein besonderes Ereignis innerhalb der Leuchte aufgetreten ist - beispielsweise ein Lampendefekt - der möglichst schnell an die Zentrale gemeldet werden muß.

Gemäß einer Weiterbildung der vorliegenden Erfindung ist bei einem Verfahren zum Steuern von elektrischen Geräten, insbesondere von Leuchten, die mittels einem Powerline-Verfahren Informationen über das gemeinsame Stromversorgungsnetz austauschen können, vorgesehen, daß die Übertragung dieser Informationen synchronisiert in aufeinanderfolgenden Sende- und Empfangs-Zyklen stattfindet, wobei ein Sende- und Empfangszyklus in mindestens zwei Zeitabschnitte - im Folgenden auch als Kanäle bezeichnet - unterteilt ist. Ein erster Zeitabschnitt ist dabei zum Übertragen von Steuerbefehlen bzw. Abfragebefehlen zu den elektrischen Geräten vorgesehen, der zweite, zeitlich von dem ersten getrennte Zeitabschnitt ist zum Übertragen von Betriebs- oder Statusinformationen ausgehend von den elektrischen Geräten vorgesehen.

In einem Zyklus kann somit von jedem Teilnehmer genau ein Vorwärtstelegramm und ein Rückwärt stelegramm übertragen werden. Wird daher beispielsweise von der Steuereinheit ein Systemtelegramm als Vorwärtstelegramm an eine bestimmte Leuchte geschickt, um z.B. deren Status abzufragen, so ist es nicht notwendig, daß vor dem Absenden eines weiteren Vorwärtstelegramms eine Antwort der Leuchte in Form eines Rückwärtstelegramms abgewartet wird, da die Übertragung von Vorwärts- und Rückwärtstelegrammen unabhängig voneinander erfolgt. Hierdurch können selbst bei größeren Laufzeiten für einzelne Telegramme hohe Übertragungsraten erzielt werden, da mehrere Telegramme gleichzeitig übertragen werden können.

Die Anwendertelegramme haben vorzugsweise eine höhere Priorität. Im Gegensatz dazu laufen routinemäßige Systemtelegramme zum zyklischen Abfragen der Betriebszustände der Leuchten vorzugsweise im Hintergrund ab. Möchte daher die Steuereinheit einen bestimmten Steuerbefehl an eine Leuchte senden, unterbricht sie hierfür das zyklische Senden der Abfragebefehle.

Vorzugsweise ist ein Sende- und Empfangszyklus sogar in drei Zeitabschnitte unterteilt, wobei der dritte Zeitabschnitt zum Übertragen von Ereignismeldungen vorgesehen ist, die von einem elektrischen Gerät bzw. einer Leuchte ausgesendet werden. Dieser asynchrone Kanal stellt sicher, daß diese besonderen Ereignismeldungen möglichst umgehend der Steuereinheit mitgeteilt werden können.

Eine Weiterbildung betrifft ein Steuerungssystem für elektrische Geräte bzw. Leuchten, die Sende- und Empfangseinheiten aufweisen, über die ihnen mit einem Powerline-Verfahren Informationen zum Betreiben der elektrischen Geräte von einer Steuereinheit über das Stromversorgungsnetz übermittelbar sind, wobei die Sende- und Empfangseinheiten der elektrischen in der oben beschriebenen Weise zueinander synchronisiert sind und ein Sende- und Empfangszyklus in mindestens zwei Zeitabschnitte unterteilt ist, von denen ein Zeitabschnitt zum Übe rtragen von Steuerbefehlen bzw. Abfragebefehlen zu einem elektrischen Gerät und der andere, zeitlich getrennte Zeitabschnitt zum Übertragen von Betriebs- oder Statusinformationen eines elektrischen Geräts zu der Steuereinheit vorgesehen ist.

Schließlich betrifft eine Weiterbildung auch eine Leuchte mit einer Schnittstelle, über die ihr mit einem Powerline-Verfahren Betriebsinformationen über ihre Stromversorgung über mittelbar sind, wobei die Schnittstelle derart ausgestaltet ist, daß sie in vorgegebenen Sende- und Empfangszyklen Informationen über die Stromversorgung empfängt bzw. aussendet, und wobei ein Sende- und Empfangszyklus in mindestens zwei Zeitabschnitte unterteilt ist, von denen ein Zeitabschnitt zum Übertragen von Steuerbefehlen bzw. Abfragebefehlen zu der Leuchte und der andere Zeitabschnitt zum Aussenden von Betriebs- oder Statusinformationen von der Leuchte vorgesehen ist. Eine Weiterbildung der vorliegenden Erfindung betrifft schließlich die Fähigkeit der Leuchten, während einer Störung der Datenübertragung oder des Nichtempfangens von neuen Befehlen autonom weiterzuarbeiten. Dies wird erfindungsgemäß dadurch erreicht, daß eine Leuchte zumindest einen Teil der empfangenen Informationen, welche als Steuerbefehle die Helligkeitssteuerung der Leuchte betreffen, speichert und diese gespeicherten Befehle selbständig wiederholt ausführt, sofern sie keine anderslautenden Informationen erhält. Die gespeicherten Befehle bilden somit eine Aktionsliste, die von der Leuchte fortwährend abgearbeitet wird, so daß ein unabhängiger Betrieb gewährleistet wird.

Ergänzend besteht dabei die Möglichkeit, die Leuchten in ihrer autonomen Arbeitsweise an die aktuellen Tages- und Jahreszeiten anzupassen, indem Befehle mit einer relativen Zeitangabe bezüglich des Sonnenstands übermi ttelt werden. Ein solcher Befehl kann beispielsweise die Anweisung beinhalten, die Leuchte zehn Minuten vor Sonnenuntergang auf 50% der maximalen Helligkeit einzuschalten. Hierzu kennt die Leuchte ihre Standortdaten und enthält eine interne Uhr zum Feststellen der aktuellen Zeit- und Datumsinformationen. Auf Grundlage dieser Informationen kann die Leuchte den aktuellen Sonnenstand und damit auch den tatsächlichen Zeitpunkt zum Ausführen des Befehls berechnen.

Eine Ergänzung dieses Konzepts besteht ferner darin, die Leuchten mit verschiedenen Sensoren auszustatten, welche bestimmte Umgebungsparameter erfassen, wie beispielsweise die Helligkeit oder die Temperatur. Auch diese Informationen können beim Betreiben der Leuchte selbstständig berücksicht igt werden oder als entsprechende Informationen an eine Zentrale übermittelt werden.

Diese Weiterbildung betrifft schließlich auch eine Leuchte mit einer Schnittstelle, über die ihr mit einem Powerline-Verfahren Betriebsinformationen über ihre Stromversorgung über mittelbar sind, wobei die Leuchte einen Speicher zum speichern derjenigen empfangenen Informationen aufweist, welche als Steuerbefehle die Helligkeitssteuerung der Leuchte betreffen, und wobei die Leuchte derart ausgestaltet ist, daß sie diese gespeicherten Befehle selbständig wiederholt ausfüh rt, sofern sie keine anderslautenden Informationen erhält.

Im Folgenden soll die Erfindung anhand der beiliegenden Zeichnung näher erläutert werden. Es zeigen:
Figur 1 die Gesamtdarstellung einer Auß enlichtanlage;
Figur 2 ein Schema der unterschiedlichen Kommunikationsebenen eines Ausführungsbeispiels des erfindungsgemäßen Lichtsteuerungssystems;
Figur 3 einen Ausschnitt der erfindungsgemäßen Außenlichtanlage;
Figur 4 ein Schema zur Unterteilung eines Sende- und Empfangs-Zyklus in drei verschiedene Kanäle; und
Figuren 5 bis 8 schematische Darstellungen der Übertragung und Ausbreitung von Telegrammen innerhalb eines Netzes.

Die Erfindung wir hier anhand des Beispiels einer Außenlichtanlage erläutert, deren Leuchten gemäß der vorliegenden Erfindung angesteuert werden. Gleichwohl kann die Erfindung allgemein für elektrische Geräte verwendet werden, die an ein gemeinsames Stromversorgungsnetz angeschlossen sind und über dieses angesteuert werden sollen. Dabei kann es sich sowohl um aktive Geräte wie Lüfter oder dergleichen als auch um passive Geräte, beispielsweise Sensoren etc. handeln. Insbesondere wäre auch die Realisierung eines Netzes von Sensoren denkbar, die über das gemeinsame Stromversorgungsnetz ihre Meßdaten an eine Zentrale übermitteln.

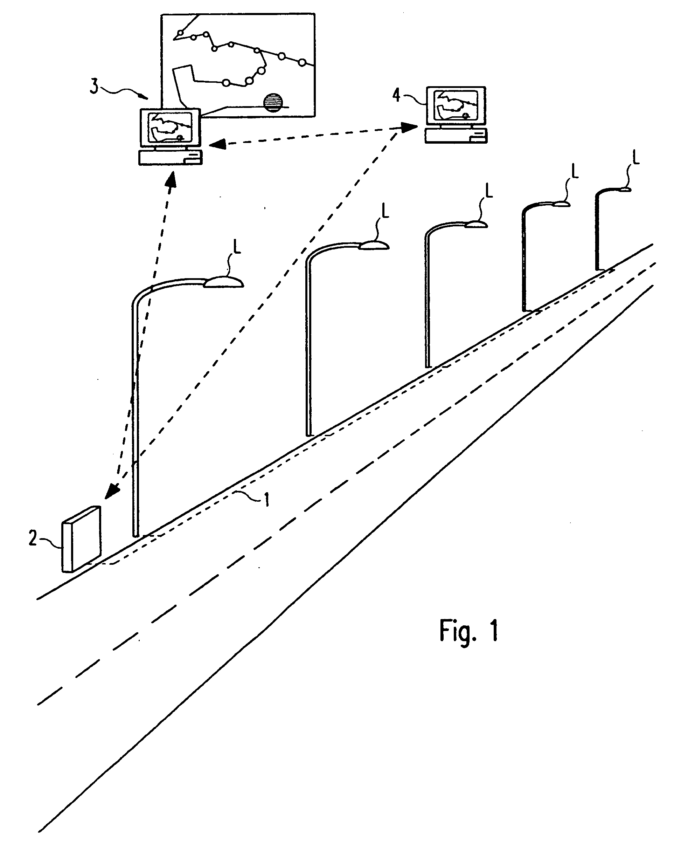

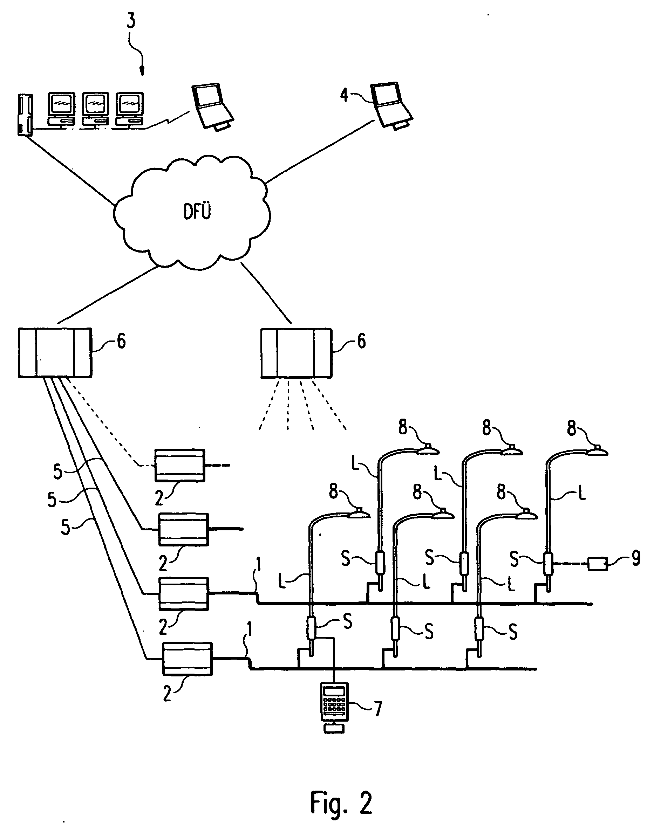

Im Folgenden soll zunächst anhand der Figuren 1 und 2 der allgemeine Aufbau des Lichtsteuerungssystems zur Steuerung einer Außenlichtanlage beschrieben werden. Die in Figur 1 dargestellte Außenlichtanlage besteht dabei aus mehreren Straßenleuchten L, die an ein gemeinsames Stromversorgungsnetz 1 angeschlossen sind. Über dieses Stromversorgungsnetz 1 sind die Leuchten L ferner auch mit einem Netzkoppler 2 verbunden, der eine lokale Steuereinheit der Außenlichtanlage darstellt. Dieser Netzkoppler 2 hat die Aufgabe, den Leuchten L entsprechende Befehle zu übermitteln, um sie beispielsweise zu veranlassen, sich ein- oder auszuschalten oder die Helligkeit in einer bestimmten Weise zu ändern. Darüber hinaus kann der Netzkoppler 2 die Leuchten L auch dazu veranlassen, Informationen über ihren derzeitigen Status oder von den Leuchten L erfaßte Meßwerte zurückzumelden. Die Kommunikation zwischen dem Netzkoppler 2 und den Leuchten L erfolgt mittels eines Powerline-Verfahrens, das später ausführlich erläutert wird.

Der zum Beispiel in einem Schaltschrank vor Ort angeordnete Netzkoppler 2 kann darüber hinaus mit übergeordneten Steuereinheiten in Verbindung treten, z.B. mit dem Zentralserver eines Managementsystems 3 - der sich im dargestellten Beispiel der Straßenbeleuchtung beispielsweise im Stadtbauamt befinden kann - oder einer Wartungszentrale 4 zur Überwachung der Funktionsfähigkeit der gesamten Anlage.

Die Kommunikation zwischen dem Netzkoppler 2 und den übergeordneten Steuereinheiten 3 und 4 erfolgt durch andere Datenübertragungsverfahren und kann in mehrere Hierarchieebenen eingeteilt sein, wie dies beispielsweise in Figur 2 dargestellt ist. Hier besteht die unterste Hierarchieebene der Außenlichtanlage aus mehreren Netzkopplern 2, die über ein lokales Stromversorgungsnetz 1 jeweils mit mehreren Leuchten L verbunden sind und mit diesen über das Powerline-Verfahren Daten austauschen.

Die Netzkoppler 2 sind über serielle Datenleitungen 5 mit einem Kommunikator 6 verbunden, der eine Zwischenebene in der Verwaltungsstruktur darstellt. Alternativ zu den seriellen Datenleitungen 5 kann die Kommunikation zwischen dem Kommunikator 6 und den Netzkopplern 2 auch per Funk erfolgen. Mehrere Kommunikatoren 6 sind schließlich mit dem Zentralserver des Managementsystems 3 verbunden, welches die Steuerung der Anlage insgesamt verwaltet. Eine Kommunikation zwischen dem Managementsystem 3 und den Kommunikatoren 6 erfolgt über DFÜ-Verbindungen, beispielsweise über das Internet oder Funk. Darüber hinaus kann eine Verbindung zu der zentralen Servicestelle 4 erstellt werden, welche für die Wartung und Überprüfung der Funktionsfähigkeit der Anlage zuständig ist.

Ein wesentlicher Aspekt der vorliegenden Erfindung betrifft die Powerline-Kommunikation zwischen einem Netzkoppler 2 und den mit diesem verbundenen Leuchten L. Hier kommt ein Verfahren zum Einsatz, welches in einfacher Weise eine zuverlässige Datenübertragung über das Stromversorgungsnetz 1 sicherstellt. Dieses soll daher im Folgenden näher erläutert werden.

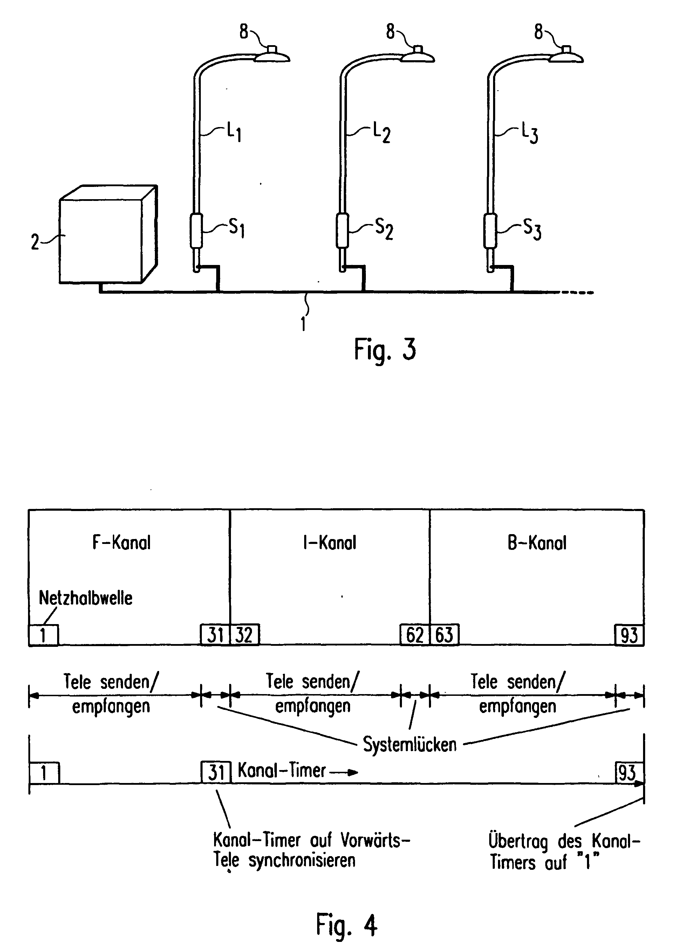

Figur 3 zeigt hierzu eine Untereinheit der Außenlichtanlage, die aus einem Netzkoppler 2 und drei daran angeschlossenen Leuchten L₁ bis L₃ besteht. Die Verbindung erfolgt durch ein Stromversorgungsnetz 1, welches zum Einen die Stromversorgung der Leuchten L₁ bis L₃ sicherstellt und zum Anderen zur Datenübertragung genutzt wird. Hierzu weist jede Leuchte L₁ bis L₃ eine Sende- und Empfangseinheit S₁ bis S₃ auf, welche die über das Stromnetz 1 empfangenen Daten auswertet und gegebenenfalls weiterleitet, sowie Betriebsinformationen der Leuchte an den Netzkoppler 2 zurücksendet.

Zur Datenübertragung erfolgt eine Phasenmodulation (PSK - Phase Shift Keying) einer hochfrequenten Trägerfrequenz von beispielsweise 104,2 kHz, die wiederum der Netzfrequenz des Stromversorgungsnetzes 1 überlagert ist. Die mittels PSK-Modulation zu übertragenden Informationen sind zeitlich in sogenannte Telegramme gebündelt, die von den Sende- und Empfangseinheiten S₁ bis S₃ der Leuchten L₁ bis L₃ sowie dem Netzkoppler 2 entschlüsselt werden können. Jedes Telegramm entspricht dabei festgelegten Konventionen und enthält eine Adresse, die angibt, an welchen bzw. welche Teilnehmer das entsprechende Telegramm gerichtet ist. Insbesondere besteht die Möglichkeit, die Leuchten L₁ bis L₃ einzeln oder in Gruppen anzusteuern.

Das oben beschriebene Powerline-Verfahren ist grundsätzlich bereits bekannt und soll daher im Weiteren nicht näher erläutert werden. Von wesentlicher Bedeutung ist allerdings, daß die an das Stromversorgungsnetz 1 angeschlossenen Teilnehmer 2 und L₁ bis L₃ untereinander synchronisiert sind, was dadurch erreicht wird, daß der Nulldurchgang der Netzspannung verwendet wird, um ein Kanalraster aufzubauen. Diese Synchronisation ist deshalb von Bedeutung, da hierdurch die Möglichkeit besteht, einzelne Sende- und Empfangs-Zyklen zu definieren, die in zeitlich voneinander getrennte Übertragungsabschnitte - im Folgenden als Kanäle bezeichnet - unterteilt werden können, wie dies beispielsweise in Figur 4 dargestellt ist. Jeder Sende- und Empfangszyklus wird also durch Nulldurchgänge der Netzspannung begrenzt, so daß seine zeitliche Dauer der Dauer einer Halbwelle der (Wechsel) )Netzspannung entspricht.

Ein gesamter Sende- und Empfangs-Zyklus besteht dabei aus drei aufeinanderfolgenden Kanälen, einem Vorwärtskanal (F-Kanal), einem Rückwärtskanal (B-Kanal) und einem dazwischenliegenden Interrupt-Kanal (I-Kanal). Die Zeitbasis für die Unterteilung in die drei Kanäle bildet die Netzsynchronisation, wobei alle drei Kanäle über ein im Rahmen des F-Kanals empfangenes Vorwärtstelegramm getriggert werden. Ein B- oder I-Kanal darf lediglich dann aufgebaut werden, falls ein Vorwärtstelegramm empfangen wurde oder der entsprechende Timer der Leuchte L₁ bis L₃ synchron läuft. Das Senden oder Weiterleiten von Telegrammen ist also nur für synchron laufende Sende- und Empfangseinheiten S₁ bis S₃ möglich. Hierdurch wird ein unbeabsichtigtes asynchrones Senden von einer nicht synchron laufenden Sende- und Empfangseinheit S₁ bis S₃ vermieden. Ferner sind die Sende- und Empfangseinheiten S₁ bis S₃ grundsätzlich empfangsbereit für Vorwärtstelegramme, welche zu einer entsprechenden Synchronisation führen.

Aufgrund der Unterteilung in die drei zuvor beschriebenen Kanäle können innerhalb eines Sendezyklus gleichzeitig ein Vorwärts-, ein Rückwärts- und ein I-Telegramm übertragen werden. Vorwärtstelegramme stammen von dem Netzkoppler 2 und sind an eine oder mehrere Leuchten L₁ bis L₃ adressiert. Üblicherweise enthalten die Vorwärtstelegramme eine Aufforderung an die Leuchten L₁ bis L₃, eine bestimmte Aktion auszuführen, beispielsweise sich ein- oder auszuschalten oder eine bestimmte Helligkeit anzunehmen. Diese Art eines Vorwärtstelegramms betrifft somit die Helligkeitssteuerung der Außenlichtanlage und wird auch als Anwendertelegramm bezeichnet. Darüber hinaus kann das Vorwärtstelegramm auch eine Aufforderung an eine Leuchte L₁ bis L₃ beinhalten, ihren derzeitigen Informationsstatus oder andere Betriebs- oder Meßparameter zurückzumelden. Da es sich hierbei in erster Linie um einen Datenaustausch bezüglich des Funktionsfähigkeit der Anlage handelt, werden derartige Vorwärtstelegramme auch als Systemtelegramme bezeichnet.

Im Gegensatz dazu stammt ein Rückwärtstelegramm von einer Leuchte L₁ bis L₃ und stellt eine Rückmeldung an den Netzkoppler 2 dar. Demzufolge generiert eine Leuchte L₁ bis L₃ nur dann ein eigenes Rückwärtstelegramm, wenn sie zuvor im Rahmen eines Vorwärtstelegramms - genau genommen eines Systemtelegramms - dazu aufgefordert wurde. Dies kann beispielsweise im Rahmen einer routinemäßigen Abfrage im Sinne eines Polling-Mechanismus erfolgen. Da diese Abfragen die Helligkeitssteuerung der Leuchten L₁ bis L₃ nicht direkt betreffen, haben sie gegenüber den Anwendertelegrammen eine niedrigere Priorität.

Wesentlich ist, daß eine Leuchte L₁ bis L₃ nur dann von sich aus ein neues Rückwärtstelegramm erzeugt und in das Stromversorgungsnetz 1 sendet, wenn sie dazu aufgefordert wurde. Hierdurch soll verhindert werden, daß die Leuchten L₁ bis L₃ willkürlich von sich aus Telegramme erzeugen und in das Stromversorgungsnetz 1 senden. Hingegen wird ein in einem Sende- und Empfangszyklus empfangenes Rückwärtstelegramm grundsätzlich in einem mittelbar oder unmittelbar folgenden Sende- und Empfangszyklus weitergeleitet, um eine Rückmeldung zu dem Netzkoppler 2 sicherzustellen. Einzige Bedingung für ein Weiterleiten ist, daß die entsprechende Sende- und Empfangseinheit S₁ bis S₃ der entsprechenden Leuchte L₁ bis L₃ synchron läuft.

Der I-Kanal wird schließlich dazu benutzt, ein außergewöhnliches Ereignis von einer Leuchte an den Netzkoppler 2 zu übermitteln. Dies kann beispielsweise dann notwendig werden, wenn innerhalb einer Leuchte L₁ bis L₃ ein besonderes Ereignis, beispielsweise ein Fehler oder eine Grenzwertüberschreitung auftritt. Ein derartiges I-Telegramm enthält eine Information über die Leuchte L₁ bis L₃, bei der der Fehler aufgetreten ist, sowie eine Identifizierung des Ereignisses, beispielsweise, um was für einen Fehler es sich handelt. Im Gegensatz zu dem Rückwärtskanal kann dieser asynchrone I-Kanal auch dann von einer Leuchte L₁ bis L₃ belegt werden, wenn sie nicht vorher im Rahmen eines Vorwärtstelegramms dazu aufgefordert wurde. Allerdings muß es sich um ein entsprechend wichtiges Ereignis handeln. Für das Weiterleiten eines I-Telegramms gelten die gleichen Bedingungen wie für ein Rückwärtstelegramm, d.h., zum Weiterleiten muß die Sende- und Empfangseinheit S₁ bis S₃ der entsprechenden Leuchte L₁ bis L₃ synchron laufen.

Durch die Möglichkeit, innerhalb eines Sende- und Empfangszyklus ein Vorwärts-, ein Rückwärts- und ein 1-Telegramm zu übertragen, wird der Datendurchsatz deutlich erhöht, da durch die Zeitlagentrennung ein Vorwärtstelegramm beispielsweise nicht zu einer Unterdrückung oder Auslöschung eines Rückwärtstelegramms führen kann. Demzufolge muss der Netzkoppler 2, nachdem er einen Abfragebefehl an eine Leuchte L₁ bis L₃ gesendet hat, nicht auf eine Antwort warten, bevor er einen neuen Befehl übermittelt.

Damit sichergestellt ist, daß ein beispielsweise von dem Netzkoppler 2 in das Stromversorgungsnetz 1 übertragenes Vorwärtstelegramm auch tatsächlich bei der dafür vorgesehenen Leuchte L₁ bis L₃ ankommt, kommt ein besonderes Übertragungsverfahren zum Einsatz, welches im Folgenden erläutert wird. Die Problematik eines Powerline-Verfahrens besteht nämlich darin, daß die Reichweite in einem Powerline-Netz aufgrund des maximal zulässigen Sendepegels und der auftretenden Störungen sowie der Dämpfung begrenzt ist. Um sicherzustellen, daß eine in das Netz eingespeiste Information auch zuverlässig erkannt wird, ist jedoch ein gewisser Minimalwert für den Signal-Störabstand notwendig. Aufgrund der physikalischen Eigenschaften der Stromleitungen kann es allerdings zu Dämpfungen kommen, die zur Folge haben, daß der Signal-Störabstand unter diesen Mindestwert fällt.

Der bei Bussystemen bekannte Mechanismus zum Auflösen von Kollisionen, bei dem ein Teilnehmer nur dann ungestört sendet, wenn auf dem Bus ein dominanter Zustand erzeugt wird, ist bei einem Powerline-Verfahren nicht möglich. Der Grund hierfür besteht darin, daß das Stromversorgungsnetz nicht in einen solchen dominanten Zustand gebracht werden kann, der für alle Teilnehmer gemeinsam erkennbar ist.

Die erfindungsgemäße Lösung dieses Problems besteht darin, dass die einzelnen Sende- und Empfangseinheiten S₁ bis S₃ der Leuchten L₁ bis L₃ als sog. Repeater wirken und ein nicht ausschließlich für sie bestimmtes Telegramm synchron wiederaufbereiten. Die Weiterleitung eines Telegramms erfolgt dabei in einem mittelbar oder unmittelbar folgenden Sende- und Empfangszyklus, synchron zu dem Netzkoppler 2 und den anderen Sende- und Empfangseinheiten S₁ bis S₃.

Sendet beispielsweise der in Figur 3 dargestellte Netzkoppler 2 ein Vorwärtstelegramm, welches für die dritte Leuchte L₃ bestimmt ist, so wird das Telegramm in dem ersten Sende- und Empfangszyklus beispielsweise lediglich von der Sende- und Empfangseinheit S₁ der direkt benachbarten Leuchte L₁ empfangen, nicht jedoch von den Sende- und Empfangseinheiten S₂ und S₃ der darauffolgenden Leuchten L₂ und L₃, da hierfür die Dämpfung durch das Stromversorgungsnetz 1 zu groß ist. In dem darauffolgenden Sende- und Empfangszyklus wird das Vorwärtstelegramm dann von der Sende- und Empfangseinheit S₁ der Leuchte L₁ wiederum in das Stromversorgungsnetz 1 eingespeist und dementsprechend von der Sende- und Empfangseinheit S₂ der mittleren Leuchte L₂ erkannt. Da das Telegramm jedoch auch nicht für die mittlere Leuchte L₂ bestimmt ist, wird die Sende- und Empfangseinheit S₂ in dem darauffolgenden Zyklus das Telegramm wiederum in das Stromversorgungsnetz 1 einspeisen, bis dieses schließlich von der Sende- und Empfangseinheit S₃ der adressierten dritten Leuchte L₃ empfangen wird.

Durch diesen Mechanismus wird somit sichergestellt, daß ein von dem Netzkoppler 2 abgesendetes Telegramm auch tatsächlich von der adressierten Leuchte empfangen wird. Dies ist auch dann der Fall, wenn die Leuchten nicht wie dargestellt hintereinander geschaltet sind, sondern netzartig miteinander verbunden sind, wobei es nicht notwendig ist, den Weg der Weiterleitung des Telegramms vorzugeben, da sich dieses lawinenartig über das gesamte Netz verteilt.

In dem soeben beschriebenen Beispiel leiten die Leuchten L₁ bis L₃ Telegramme, die sie in einem bestimmten Sende- und Empfangszyklus empfangen haben, in dem unmittelbar darauffolgenden Zyklus weiter. Alternativ dazu besteht allerdings auch die Möglichkeit, ein Telegramm erst nach einer gewissen Pause in einem späteren Sende- und Empfangszyklus weiterzuleiten.

Um zu verhindern, daß ein einmalig abgesendetes Telegramm das Stromversorgungsnetz in Schleifen wiederholt durchläuft und dabei von den Sende- und Empfangseinheiten immer wieder repeatet wird, weisen die Telegramme einen Index oder dergleichen auf, über den sie eindeutig erkennbar sind. Wird dieses Telegramm dann zu einem späteren Zeitpunkt von einer Sende- und Empfangseinheit, die das Telegramm bereits früher weitergeleitet hat, wiederempfangen, so wird ein nochmaliges Weiterleiten unterdrückt. Ferner wird in dem oben beschriebenen Beispiel die Leuchte L₃, für die das Telegramm bestimmt war, das Telegramm ebenfalls nicht weiterleiten, allerdings nur dann, wenn dieses Telegramm ausschließlich für sie bestimmt war. Ist das Telegramm allerdings an eine Gruppe von Leuchten adressiert, so wird jede Leuchte das Telegramm beim erstenmal weiterleiten, da nur dann sichergestellt ist, daß auch tatsächlich alle Leuchten das Telegramm empfangen.

In dem oben beschriebenen Beispiel war davon ausgegangen worden, daß das von dem Netzkoppler 2 bzw. den Sende- und Empfangseinheiten S₁ bis S₃ in das Stromversorgungsnetz 1 eingespeiste Telegramm nur von den benachbarten Einheiten empfangen wird. Es wäre allerdings auch denkbar, daß ein beispielsweise von dem Netzkoppler 2 in das Stromversorgungsnetz 1 eingespeistes Telegramm von den Sende- und Empfangseinheiten S₁ und S₂ der beiden Leuchten L₁ und L₂ gleichzeitig empfangen wird, weil sich diese relativ nahe an dem Netzkoppler 2 befinden. Diese Sende- und Empfangseinheiten S₁ und S₂ werden dann in dem darauffolgenden Sende- und Empfangszyklus beide das Telegramm in das Netz einspeisen. Da sie allerdings untereinander synchronisiert sind, wird ein gegenseitiges Auslöschen der von den beiden Sende- und Empfangseinheiten S₁ und S₂ abgegebenen Signale vermieden. Damit wird durch das erfindungsgemäße Konzept der synchronisierten Repeater-Funktion der einzelnen Leuchten sichergestellt, daß ein an einer Stelle in das Netz eingespeistes Telegramm zuverlässig und sicher an der adressierten Stelle empfangen wird.

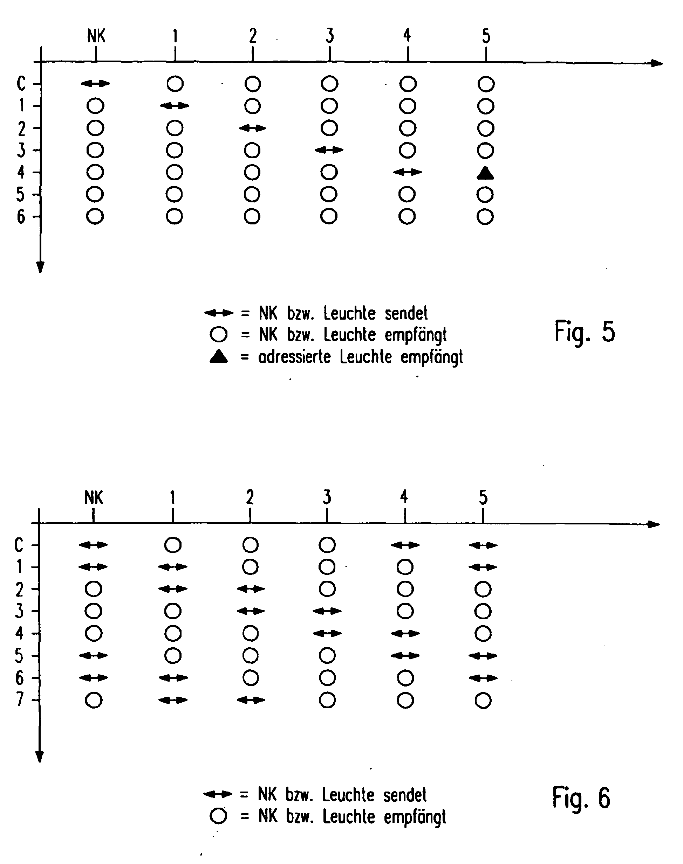

Die Vorteile des zuvor beschriebenen Verfahrens sollen im Folgenden anhand der Figuren 5 bis 8 erläutert werden. Figur 5 stellt dabei schematisch die Weiterleitung eines Vorwärtstelegramms in einem Netz dar, wobei die vertikal verlaufende Achse die Zeit (in Sende- und Empfangs-Zyklen) darstellt, während die horizontal verlaufende Achse die Entfernung des Telegramms vom Ursprungsort angibt. Diese Entfernung wird dabei in sog. logischen Repeater-Stufen angegeben und entspricht der Anzahl der Wiederholungen eines Empfangs des Telegramms in einem Zyklus und des Weiterleitens in dem unmittelbar darauffolgenden Zyklus.

In dem dargestellten Beispiel wird davon ausgegangen, daß ein von einer Einheit gesendetes Signal ausschließlich von der benachbarten Einheit empfangen wird. Ein Doppelpfeil entspricht dabei dem Ereignis, daß ein Telegramm in das Netz gesendet wird, während ein Kreis darstellt, daß ein Teilnehmer empfangsbereit ist. Im dargestellten Beispiel sendet beispielsweise im Zyklus 0 der Netzkoppler NK das für den Teilnehmer 5 bestimmte Telegramm, das zeitgleich von dem benachbarten Teilnehmer 1 empfangen wird.

Da das Telegramm für den Teilnehmer 5 bestimmt ist, sendet der Teilnehmer 1 im Zyklus 1 das Telegramm ein weiteres Mal in das Stromnetz, wobei dieses nun von dem benachbarten Teilnehmer 2 empfangen wird. Auch dieser sendet das Telegramm in dem darauffolgenden Zyklus 3 in das Netz. Zu diesem Zeitpunkt werden sowohl der Teilnehmer 1 als auch der Teilnehmer 3 das von dem Teilnehmer 2 gesendete Telegramm empfangen. Da allerdings der Teilnehmer 1 erkennt, daß er dieses Telegramm bereits zu einem früheren Zeitpunkt weitergeleitet hat, erfolgt eine Weiterleitung des Telegramms in dem darauffolgenden Zyklus 3 ausschließlich durch den Teilnehmer 3, der Teilnehmer 1 unterdrückt vorzugsweise ein weiteres Senden. Diese Weiterleitung des Telegramms setzt sich schließlich fort, bis das Telegramm bei dem adressierten Teilnehmer 5 angekommen ist - dargestellt durch das Dreieck.

Wesentlich für das dargestellte Übertragungsverfahren ist, daß die über ein Stromnetz verbundenen Teilnehmer ein gemeinsames Zeitraster für das Senden von Telegrammen aufweisen. Eine Synchronisation kann beispielsweise durch eine Überwachung des Nulldurchgangs der Netzspannung und durch ein Telegramm selbst erfolgen, wie dies beispielsweise in Figur 6 dargestellt ist. Hierbei wird in dem Zyklus 0 von dem Netzkoppler NK ein Telegramm in das Netz eingespeist, welches sich - wie zuvor beschrieben - über das Netz hinweg ausbreitet und dabei für eine Synchronisation aller Teilnehmer zu dem Netzkoppler NK sorgt. Die Synchronisation wird zusätzlich dadurch verbessert, daß das Synchronisations-Telegramm von dem Netzkoppler NK und den weiteren Teilnehmern jeweils in zwei aufeinanderfolgenden Zyklen gesendet wird.

Nachdem der Netzkoppler NK das Synchronisations-Telegramm ein zweites Mal gesendet hat, ist noch eine gewisse Wartezeit - im dargestellten Beispiel von 3 Zyklen - notwendig, bis ein neues Telegramm gesendet werden kann, um sicherzustellen, daß sich das zuvor gesendete Signal bereits weit genug ausgebreitet und damit eine ausreichende Synchronisation stattgefunden hat. Auch bei diesem neuen Signal ist es möglich, eine bestimmte Anzahl an Wiederholungen vorzunehmen, um damit die Übertragungssicherheit zu erhöhen.

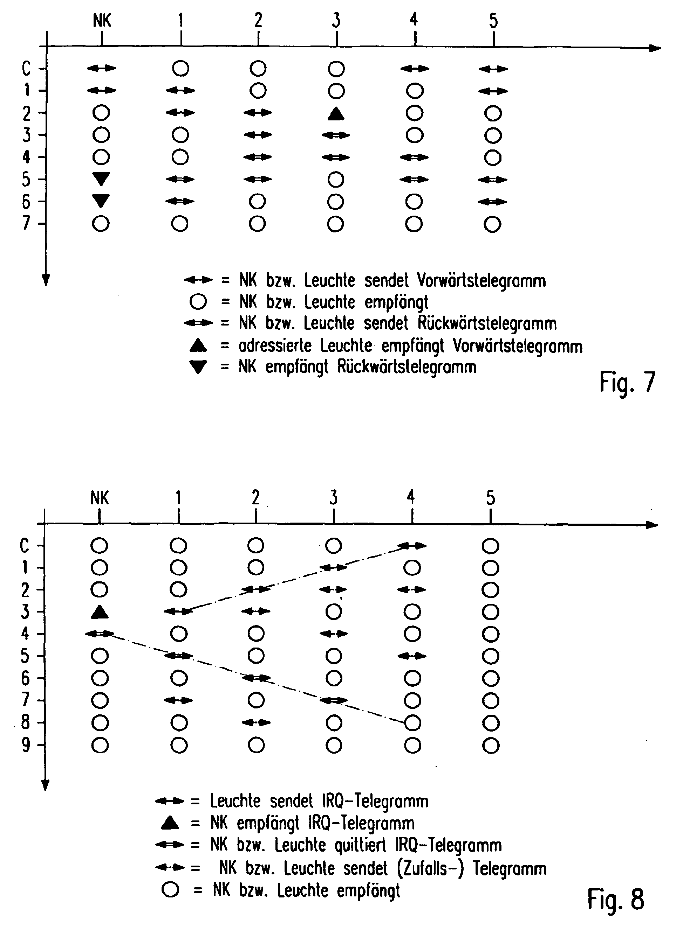

Figur 7 stellt nun die Ausbreitung eines Vorwärtstelegramms sowie die Zurückmeldung über ein Rückwärtstelegramm dar, wobei sämtliche Telegramme zur Erhöhung der Übertragungssicherheit einmal wiederholt werden.

Im Zyklus 0 sendet im dargestellten Beispiel der Netzkoppler NK ein Systemtelegramm, welches an den Teilnehmer 3 gerichtet ist und diesen dazu auffordert, eine Betriebsinformation zurückzumelden. Wie in den vorherigen Beispielen breitet sich das Vorwärtstelegramm derart aus, daß es während des Zyklus 2 von dem Teilnehmer 2 in das Netz eingespeist und von dem Teilnehmer 3 empfangen wird, was wiederum durch das Dreieck dargestellt ist. Dieser Teilnehmer 3 leitet das Vorwärtstelegramm in den darauffolgenden Zyklen 3 und 4 allerdings nicht mehr weiter, sondern sendet stattdessen ein Rückwärtstelegramm, welches an den Netzkoppler NK adressiert ist und die entsprechende Information enthält. Dieses Rückwärtstelegramm breitet sich nun in sämtliche Richtungen über das Netz aus, bis es schließlich in dem Zyklus 5 von dem ersten Teilnehmer repeatet und damit von dem Netzkoppler NK empfangen wird. Bereits vorher könnte der Netzkoppler NK allerdings schon ein weiteres Vorwärtstelegramm abgesendet haben, da aufgrund der Unterteilung eines Zyklus in die drei Kanäle, die Vorwärts- und Rückwärtstelegramme unabhängig voneinander in verschiedene Transferrichtungen laufen können. Dieses Beispiel verdeutlicht somit, daß durch die Unterteilung eines Sende- und Empfangszyklus in drei unabhängige Kanäle der Datendurchsatz erhöht werden kann.

Figur 8 zeigt schließlich einen Fall, in dem der Teilnehmer 4 aufgrund eines außergewöhnlichen Ereignisses ein I-Telegramm sendet, welches unabhängig von den angedeuteten Vorwärts- oder Rückwärtstelegrammen zu dem Netzkoppler NK in der oben beschriebenen Weise übertragen wird.

Die dargestellten Beispiele machen deutlich, daß eine Weiterleitung von Telegrammen so lange erfolgt, bis diese schließlich von dem Adressaten empfangen werden. Da Vorwärts-, Rückwärts- und I-Telegramme unabhängig voneinander laufen, wird ein hoher Datendurchsatz gewährleistet.

Der soeben beschriebene Datenverkehr mittels Powerline-Kommunikation findet lediglich zwischen einem Netzkoppler und den über ein Stromnetz verbundenen Leuchten statt. Die weiteren Datentransfers erfolgen hingegen durch andere Kommunikationstechniken, die im Folgenden nicht weiter erläutert werden. Um jede der einzelnen Leuchten individuell oder in Gruppen ansprechen zu können, weisen die Leuchten eine Betriebsadresse auf, die in eine entsprechende Gruppen- und Einzeladresse unterteilt ist. Diese Betriebsadresse kann insbesondere Informationen über den geographischen Standort der Leuchte enthalten. Wie in Figur 1 dargestellt ist, können dann die Leuchten der Außenlichtanlage auf einem Bildschirm des Zentralservers 3 in einer grafischen Oberfläche dargestellt werden. Zusätzlich können die Zustände der einzelnen Leuchten dargestellt werden, beispielsweise ihr derzeitiger Helligkeitsstatus oder andere Informationen, die die Funktionsfähigkeit der einzelnen Leuchten betreffen.

Die Darstellung auf einer grafischen Oberfläche bietet die Möglichkeit, auf eine besonders einfache und anschauliche Weise einen bestimmten Teil der Leuchten anzusprechen, um ihnen individuelle Befehle zu übermitteln. Hierfür können die gewünschten Leuchten bzw. das entsprechende Gebiet mit Hilfe eines Eingabegeräts - beispielsweise einer Maus - markiert werden. Die innerhalb des markierten Gebietes liegenden Leuchten erhalten dann automatisch die gewünschte Anweisung. Hierdurch kann auf eine besonders einfache Weise der Betrieb der Außenlichtanlage gesteuert werden.

Zur Bestimmung der Position der einzelnen Leuchten L kann vorgesehen sein, daß jede Leuchte einen geeigneten GPS-Empfänger beinhaltet, der eine genaue Bestimmung der Position gestattet. Diese Daten können über die verschiedenen Kommunikationsstufen hinweg zu dem Zentralserver 3 oder der Wartungszentrale 4 zurückgemeldet werden. Um die Kosten für jeweils einen eigenen GPS-Empfänger sparen zu können, kann allerdings auch vorgesehen sein, daß die Leuchten L - wie in Fig. 2 dargestellt - an ein geeignetes GPS-Gerät 7 angeschlossen werden können, so daß beispielsweise während der Installation die entsprechenden Standortdaten von der Leuchte L gespeichert werden können.

Die in den Leuchten L gespeicherten Standortdaten können darüber hinaus auch bei einer weiteren erfindungsgemäßen Funktion der Leuchten L zum Einsatz kommen. Diese besitzen nämlich die Fähigkeit, bis zu einem gewissen Grad autonom zu arbeiten, falls sie keine Befehle erhalten. Dies wird dadurch ermöglicht, daß die Leuchten L einen Speicher aufweisen, in dem die zuletzt empfangenen Helligkeitsbefehle gespeichert werden. Diese Befehle stellen eine Aktionsliste dar, die von einer Leuchte L selbständig abgearbeitet wird, sofern keine neuen Befehle empfangen werden. Hierzu enthalten die Leuchten L eine interne Uhr, welche die zeitgenaue Ausführung der Aktionsliste sicherstellt, so daß sich eine Leuchte L beispielsweise abends um 20:00 Uhr selbständig einschaltet und morgens um 7:00 Uhr wieder ausschaltet. Die Synchronisation der internen Uhr kann beispielsweise mit Hilfe von über das Stromnetz übermittelten Zeitdaten erfolgen.

Eine zusätzliche Verbesserung dieser sog. Freilauf-Funktion wird dadurch erreicht, daß keine zeitfesten Befehle übermittelt werden, sondern lediglich zeit-relative Befehle, die sich auf den jeweiligen Sonnenstand beziehen. Hierzu können die über das GPS-Gerät 7 erhaltenen Positionsdaten sowie die mit Hilfe der Uhr erhaltenen Zeit- und Datumsangaben verwendet werden. Anhand dieser Daten kann der jeweilige Sonnenstand berechnet werden, so daß sich die Leuchten L beispielsweise eine halbe Stunde vor Sonnenuntergang automatisch mit einer Helligkeit einschalten, die 50 % der maximalen Helligkeit entspricht. Zum Zeitpunkt des Sonnenuntergangs kann dann die Helligkeit auf einen Maximalwert geändert werden.

Ergänzend zur Berechnung des Sonnenstandes oder alternativ dazu können die Leuchten L allerdings auch einen in den Fig. 2 und 3 dargestellten Lichtsensor 8 aufweisen, dessen Eingangssignal bei der Helligkeitssteuerung der Leuchten L berücksichtigt wird. Die von den Lichtsensoren 8 erfaßten Daten können ferner im Rahmen eines zyklischen Abfragens an den zentralen Server 3 übermittelt werden, um an zentraler Stelle entsprechende Informationen zur Steuerung der Anlage berücksichtigen zu können. Darüber hinaus können die Leuchten L auch andere Sensoren zur Erfassung von Umgebungsparametern, beispielsweise der Temperatur oder dergleichen enthalten.

Der in den Fig. 2 und 3 dargestellte Sensor kann allgemein zur Erfassung von Umgebungsparametern vorgesehen sein, die dann bei der Ausführung der Befehle berücksichtigt werden. Beispielsweise kann der Sensor auch zur Erfassung der Temperatur oder des Vorhandenseins von Nebel verwendet werden. Schließlich wäre es auch denkbar, einen Neigungssensor zu installieren, über den feststellbar ist, ob die Leuchte aufgrund von äußeren Einflüssen - beispielsweise eines Unfalls oder dergleichen - beschädigt bzw. geneigt wurde.

Die Aktionsliste für die zuvor beschriebene Freilauf-Funktion der Leuchten L wird - wie beschrieben - dadurch erstellt, daß die Leuchten L die zuletzt während des regulären Betriebs erhaltenen Befehle speichern. Die Freilauf-Funktion kann alternativ dazu auch gezielt dadurch eingesetzt werden, daß den Leuchten L zu Beginn des Betriebs einmalig eine entsprechende Aktionsliste übermittelt wird. Anschließend erfolgen allerdings keine weiteren Befehle mehr. Die Leuchten L arbeiten dann so lange selbständig, bis sie irgendwann später neue Befehle enthalten. Das Einspeichern einer entsprechenden Aktionsliste kann alternativ dazu auch über eine Powerline-Schnittstelle erfolgen, über die beispielsweise ein Laptop 9 oder dergleichen angeschlossen wird. Hierdurch können die Leuchten L unabhängig von einer Außenlichtanlage programmiert werden und anschließend selbstständig arbeiten.

Die erfindungsgemäße Außenlichtanlage zeichnet sich somit durch die vielfältige Funktionsfähigkeit der einzelnen Leuchten aus, die unter einer Berücksichtigung von entsprechenden Umgebungsparametern weitestgehend unabhängig arbeiten können, gleichzeitig allerdings auch für einen umfangreichen Datenaustausch mit anderen Leuchten oder einen zentralen Steuereinheit geeignet sind. Dabei wird durch die Repeater-Funktion der Leuchten auch über weite Entfernungen hinweg ein zuverlässiger Datentransfer über das Stromnetz ermöglicht, ohne daß hierfür zusätzliche Datenleitungen notwendig wären.

## Patentansprüche

1. Verfahren zum Steuern von elektrischen Leuchten (L) die an ein gemeinsames Stromversorgungsnetz (1) angeschlossen sind, wobei die elektrischen Leuchten mittels einem Powerline-Verfahren Informationen mit einer Steuereinheit (2) über das Stromversorgungsnetz (1) austauschen,
**dadurch gekennzeichnet,**
**daß** die elektrischen Leuchten derart zueinander synchronisiert sind, daß sie in vorgegebenen Sende- und Empfangszyklen, bestehend aus drei aufeinander folgenden Kanälen, einem Vorwärtskanal oder F-Kanal, einem Rückwörtskanal oder B-Kanal und einem dazwischenliegenden Interruptkanal oder I-Kanal, Informationen von dem Stromversorgungsnetz (1) empfangen bzw in dieses senden, wobei jede elektrische Leuchten Rahmen einer Repeater-Funktion eine in einem Sende- und Empfangszyklus empfangene Information in einem mittelbar oder unmittelbar folgenden Sende- und Empfangszyklus wieder in das Stromversorgungsnetz (1) sendet und die elektrische Leuchte eine Information nicht wieder in das Stromversorgungsnetz (1) sendet, falls sie diese Information bereits zu einem früheren Zeitpunkt weitergeleitet hat.

2. Verfahren nach Anspruch 1,
**dadurch gekennzeichnet,**
**daß** ein elektrisches Gerät eine in einem Sende- und Empfangszyklus empfangene Information lediglich dann wieder in einem mittelbar oder unmittelbar folgenden Sende- und Empfangszyklus in das Stromversorgungsnetz (1) sendet, falls die Information nicht ausschließlich für das jeweilige elektrische Gerät selbst bestimmt ist.

3. Verfahren nach Anspruch 1 oder 2,
**dadurch gekennzeichnet,**
**daß** die elektrischen Geräte eine weiterzuleitende Information für eine vorgegebene Anzahl von aufeinanderfolgenden Sende- und Empfangszyklen in das Stromversorgungsnetz (1) senden.

4. Steuerungssystem für elektrische Geräte, insbesondere für Leuchten (L), die an ein gemeinsames Stromversorgungsnetz (1) angeschlossen sind,
wobei das Steuerungssystem mindestens eine ebenfalls an das Stromversorgungsnetz (1) anschließbar Steuereinheit (2) sowie Sende- und Empfangseinheiten (S) aufweist, die mit einem Powerline-Verfahren Informationen mit der Steuereinheit (2) über das Stromversorgungsnetz (1) austauschen und jeweils einem elektrischen Gerät zugeordnet werden können, **dadurch gekennzeichnet,**
**daß** die Sende- und Empfangseinheiten (S) derart zueinander synchronisiert sind, daß sie in vorgegebenen Sende- und Empfangszyklen bestehend aus drei aufeinander folgenden Kanälen, einem Vorwärtskanal oder F-Kanal, einem Rückwörtskanal oder B-Kanal und einem dazwischenliegenden Interruptkanal oder I-Kanal, Informationen von dem Stromversorgungsnetz (1) empfangen bzw. in dieses senden,
wobei die Sende- und Empfangseinheiten (S) zum Weiterleiten der Informationen eine Repeater-Funktion aufweisen, indem sie eine in einem Sende- und Empfangszyklus empfangene Information in einem mittelbar oder unmittelbar folgenden Sende- und Empfangszyklus wieder in das Stromversorgungsnetz (1) senden und die Sende- und Empfangseinheiten (S) eine Information nicht wieder in das Stromversorgungsnetz (1) senden, falls sie diese Information bereits zu einem früheren Zeitpunkt weitergeleitet haben.

5. Leuchte (L) für eine Lichtanlage, die aus mehreren an ein gemeinsames Stromversorgungsnetz (1) angeschlossen Leuchten (L) besteht,
wobei die Leuchte eine Sende- und Empfangseinheit (S) aufweist, die als Schnittstelle gemäß dem Powerline-Verfahren ausgelegt ist,
**dadurch gekennzeichnet,**
**daß** die Sende- und Empfangseinheit (S) derart ausgestaltet ist, daß sie in vorgegebenen Sende- und Empfangszyklen, bestehend aus drei aufeinander folgenden Kanälen, einem Vorwärtskanal oder F-Kanal, einem Rückwörtskanal oder B-Kanal und einem dazwischenliegenden InterruptKanal oder I-Kanal, Informationen austauschen kann, wobei die Sende- und Empfangseinheit (S) zum Übertragen der Informationen eine Repeater-Funktion aufweist, indem sie eine in einem Sende- und Empfangszyklus empfangene Information in einem mittelbar oder unmittelbar folgenden Sende- und Empfangszyklus wieder sendet und die Leuchte eine Information nicht wieder in das Stromversorgungsnetz (1) sendet, falls sie diese Information bereits zu einem früheren Zeitpunkt weitergeleitet hat.

## Claims

1. A method for the control of electrical luminaires (L), which are connected to a common current supply mains network (1), wherein the electrical luminaires exchange information with a control unit (2) via the current supply mains network (1) by means of a powerline process,
**characterized in that**
the electrical luminaires are synchronized with each other in such a way that they receive or transmit information from or to the current supply mains network (1) in predetermined transmission and reception cycles, consisting of three successive channels, a forward or F-channel, a return or B-channel, and an interrupt or 1-channel lying between them,
wherein each electrical luminaire within the framework of a repeater function transmits information received in one transmission and reception cycle back to the current supply mains network (1) in an indirectly or directly following transmission and reception cycle, and
the electrical luminaire does not transmit information back to the current supply mains network (1) if it has already passed this information on at an earlier point in time.

2. A method according to claim 1,
**characterized in that**
an electrical device transmits information received in one transmission and reception cycle back to the current supply mains network (1) in an indirectly or directly following transmission and reception cycle only if the information is not exclusively intended for the electrical device concerned.

3. A method according to claim 1 or 2,
**characterized in that**
the electrical devices transmit information, which is to be passed on, into the current supply mains network (1) for a predetermined number of successive transmission and reception cycles.

4. A control system for electrical devices, in particular for luminaires (L), which are connected to a common current supply mains network (1),
wherein the control system has at least one control unit (2), likewise connectable to the current supply mains network (1), and also transmission and reception units (S) which with a powerline process exchange information with the control unit (2) by way of the current supply mains network (1), and can each be associated with an electrical device,
**characterized in that**
the transmission and reception units (S) are synchronized with each other in such a way that they receive or transmit information from or to the current supply mains network (1) in predetermined transmission and reception cycles, consisting of three successive channels, a forward or F-channel, a return or B-channel, and an interrupt or I-channel lying between them, wherein the transmission and reception units (S) have a repeater function for passing on information **in that** they transmit information received in one transmission and reception cycle back to the current supply mains network (1) in an indirectly or directly following transmission and reception cycle, and the transmission and reception units (S) do not transmit information back to the current supply mains network (1) if they have already passed this information on at an earlier point in time.

5. A luminaire (L) for a lighting facility that consists of a plurality of luminaires (L) connected to a common current supply mains network (1),
wherein the luminaire has a transmission and reception unit (S) that is designed as an interface in accordance with the powerline process,
**characterized in that**
the transmission and reception unit (S) is configured in such a way that it can exchange information in predetermined transmission and reception cycles, consisting of three successive channels, a forward or F-channel, a return or B-channel, and an interrupt or I-channel lying between them,
wherein the transmission and reception unit (S) has a repeater function for the transmission of the information **in that** it transmits information received in one transmission and reception cycle back in an indirectly or directly following transmission and reception cycle, and the luminaire does not transmit information back to the current supply mains network (1) if it has already passed this information on at an earlier point in time.

## Revendications

1. Procédé servant à commander des lampadaires (L) électriques, lesquels sont raccordés à un réseau commun d'alimentation en courant (1), sachant que les lampadaires électriques échangent des informations avec une unité de commande (2) par l'intermédiaire du réseau d'alimentation en courant (1) au moyen d'un procédé de ligne de tension,
**caractérisé en ce**
**que** les lampadaires électriques sont synchronisés entre eux de telle manière qu'ils reçoivent du réseau d'alimentation en courant (1), au cours de cycles de transmission et de réception prédéfinis, se composant de trois canaux se suivant les uns les autres, d'un canal en amont ou le canal F, d'un canal arrière ou le canal B et d'un canal d'interruption intercalé entre ces derniers ou le canal I, des informations et les transmettent audit réseau d'alimentation en courant,
sachant que chaque lampadaire électrique transmet à nouveau dans le cadre d'une fonction de répétition, une information reçue au cours d'un cycle de transmission et de réception, au réseau d'alimentation en courant (1) au cours d'un cycle de transmission et de réception se suivant indirectement ou directement et que le lampadaire électrique ne transmet pas à nouveau une information au réseau d'alimentation en courant (1) s'il a déjà transféré cette information à un moment antérieur.

2. Procédé selon la revendication 1,
**caractérisé en ce**
**qu'**un appareil électrique transmet alors à nouveau au cours d'un cycle de transmission et d'un cycle de réception se suivant indirectement ou directement au réseau d'alimentation en courant (1) une information reçue au cours d'un cycle de transmission et de réception, si l'information ne se destine pas exclusivement à l'appareil électrique concerné.

3. Procédé selon la revendication 1 ou 2,
**caractérisé en ce**
**que** les appareils électriques transmettent au réseau d'alimentation en courant (1), une information à transférer pour un certain nombre de cycles de transmission et de réception se suivant les uns les autres.

4. Système de commande destiné à des appareils électriques, en particulier à des lampadaires (L), qui sont raccordés à un réseau commun d'alimentation en courant (1),
sachant que le système de commande présente au moins une unité de commande (2) pouvant être raccordée également au réseau d'alimentation en courant (1) ainsi que des unités de transmission et de réception (S), lesquelles échangent grâce à un procédé de ligne de tension des informations avec l'unité de commande (2) par l'intermédiaire du réseau d'alimentation en courant (1) et peuvent être respectivement associées à un appareil électrique,
**caractérisé en ce**
**que** les unités de transmission et de réception (S) sont synchronisées les unes par rapport aux autres de telle manière qu'elles reçoivent au cours de cycles de transmission et de réception prédéfinis, se composant de trois canaux se suivant les uns les autres, d'un canal en amont ou le canal F, d'un canal arrière ou le canal B et d'un canal d'interruption intercalé entre ces derniers ou le canal I, des informations du réseau d'alimentation en courant (1) ou les transmettent à ce dernier,
sachant que les unités de transmission et de réception (S) servant à transférer les informations présentent une fonction de répétition, en ce qu'elles transmettent à nouveau au réseau d'alimentation en courant (1), au cours d'un cycle de transmission et de réception se suivant indirectement ou directement une information reçue au cours d'un cycle de transmission et de réception et sachant que les unités de transmission et de réception (S) ne transmettent pas à nouveau au réseau d'alimentation en courant (1) une information si elles ont déjà transféré ladite information à un moment antérieur.

5. Lampadaire (L) pour une installation d'éclairage, qui se compose de plusieurs lampadaires (L) raccordés à un réseau commun d'alimentation en courant (1),
sachant que le lampadaire présente une unité de transmission et de réception (S), qui est configurée comme une interface selon le procédé de ligne de tension,
**caractérisé en ce**
**que** l'unité de transmission et de réception (S) est configurée de telle manière qu'elle peut échanger au cours de cycles de transmission et de réception prédéfinis, se composant de trois canaux se suivant les uns les autres, d'un canal en amont ou le canal F, d'un canal arrière ou le canal B et d'un canal d'interruption intercalé entre ces derniers ou le canal I, des informations,
sachant que l'unité de transmission et de réception (S) servant à transmettre des informations présente une fonction de répétition en ce qu'elle transmet à nouveau au cours d'un cycle de transmission et de réception se suivant indirectement ou directement, une information reçue au cours d'un cycle de transmission et de réception et que le lampadaire ne transmet pas à nouveau une information au réseau d'alimentation en courant (1), s'il a déjà transféré ladite information à un moment ultérieur.
